Europäisches Patentamt

European Patent Office

Office européen des brevets

(11) Publication number: **0 048 121**
**A1**

(12) # EUROPEAN PATENT APPLICATION

(21) Application number: **81304073.0**

(22) Date of filing: **07.09.81**

(51) Int. Cl.³: **C 01 G 49/12**
**H 01 M 4/58, H 01 M 6/16**

(30) Priority: **12.09.80 US 186585**

(43) Date of publication of application:
**24.03.82 Bulletin 82/12**

(84) Designated Contracting States:
**DE FR GB**

(71) Applicant: **Ray-O-Vac Corporation**
**101 East Washington Avenue**
**Madison WI 53703(US)**

(72) Inventor: **Margalit, Nehemiah**
**Booth Road**
**Chester, N.Y. 10918(US)**

(72) Inventor: **Joshi, Ashok Venimadhav**
**117 Shankar Niwas Shivaji Park Road No.3**
**Bombay(IN)**

(72) Inventor: **Aker, Wesley Edward**
**Bull Mill Road**
**Chester, N.Y. 10918(US)**

(74) Representative: **Hedley, Nicholas James Matthew**
**Thames House (fifth floor) Millbank**
**London SWIP 4QF(GB)**

(54) **Cathode material for electrochemical cells.**

(57) Cathode material is provided for use in an electrolyte cell having an active metal anode and a compatible electrolyte. The cathode material is iron-rich iron sulphide of the general composition $Fe_{(x + 1)}S$ where x is between 0.05 and 0.2 and is substantially devoid of sulphur-rich phases. The cathode material can be made by heating at 600°C a mixture of iron with iron sulphide and/or sulphur in the correct proportions to give the desired composition. An example of a cell in which the cathode material can be used is Li/a molar solution of $LiAsF_6$ in a mixture of 50% propylene carbonate and 50% dimethoxyethane/$Fe_{1.2}S$. The use of the cathode material in a cell gives rise to a stable voltage when the cell is first connected in an electronic circuit.

EP 0 048 121 A1

## Cathode Material for Electrochemical Cells

The present invention relates to a cathode material for use in electrochemical cells, and also to cells having a cathode made of the material and to a method of making the material.

It has previously been proposed to make electrochemical cells using cathodes made of iron sulphide. However, the cathode material was always either stoichiometric or sulphur-rich iron sulphide and the use of these materials results in a high apparent open circuit voltage (OCV) and often gives rise to an initial high voltage plateau when the cells are discharged. It will be appreciated that such behaviour is undesirable, especially when the cells are employed in circuits that are voltage-sensitive.

The present invention provides a cathode material that, when incorporated into a cell, gives rise to an open circuit voltage that is stable and much closer to the theoretical value than known iron sulphide cathode material.

Thus, in accordance with the present invention there is provided a cathode material having the general formula $Fe_{(1 + x)}S$, where x is a number in the range 0.05 to 0.2, the material being substantially devoid of sulphur-rich phases.

Preferably, x has a value in the range of from 0.1 to 0.2 e.g. about 0.2. The cathode material may conveniently be made by mixing together powdered iron sulphide and metallic iron in a proportion to provide a composition of about $Fe_{(1 + x)}S$ and interdiffusing (sintering) the mixture to substantially eliminate from the sintered mass any phase containing $FeS_y$, y being a number not less than 1. Advantageously, sintering (interdiffusion) is performed by firing at a temperature of at least $500^{\circ}C$ under an inert atmosphere for at least about 15 minutes, for example at $600^{\circ}C$ to $800^{\circ}C$ for 30

minutes. Of course, if desired the cathode material of the present invention can be made directly from the elements iron, sulphur and, optionally, iron sulphide in the proportions required by the formula defining the chemical composition of the cathode material of the invention.

It is believed, as a matter of theory, that abnormally high open circuit voltages and initial high voltage plateaus upon discharge of the prior art cells described above are caused by the presence of sulphur-rich phases in the cathode material, phases having compositions represented by the formula $FeS_y$, where y is a number greater than 1. However, we do not wish to be limited to this theory because it may be that the reduction of the open circuit voltage is caused by some other factor and that the elimination of sulphur-rich phases is merely an attendant phenomenon.

The present invention also contemplates an electrochemical cell containing as an anode an active metal, for example sodium, lithium and the like, a conventional electrolyte compatible with such an anode and an iron sulphide cathode made of the material according to the present invention. A specific example of such a cell may use lithium as an anode, a solution of $LiAsF_6$ in an inert solvent as an electrolyte and a metal-rich iron sulphide cathode of the invention.

The present invention will now be described in more detail in the following Example:

Cathode material of the present invention was made by grinding together $Fe_{0.9}S$ powder with metallic iron powder to form a ground mixture having a composition equivalent to the formula $Fe_{1.2}S$. The ground mixture was then formed into slugs and the slugs were heat treated under an inert atmosphere for half an hour some at $600^{\circ}C$ and others at $800^{\circ}C$. The thus sintered, interdiffused slugs were then ground, the ground powder was formed into cathodes and the cathodes were included in button cells having a lithium anode and an electrolyte comprising a 1 molar solution of $LiAsF_6$ dissolved in a 50% propylene carbonate -50% dimethoxyethane solvent. The cells were all prepared in a dry argon atmosphere. The following Table compares the open circuit voltages after various periods of time of these cells with the open circuit voltages of similar cells, identical except that non-diffused (unfired) cathode material of identical composition was used.

TABLE

| Time (Hr) | OCV (Volts) | |
| --- | --- | --- |
| | Fired Pellets | Unfired Pellets |
| 1 | 1.763 | 2.735 |
| 24 | 1.807 | 2.617 |
| 140 | 1.896 | 2.579 |
| 212 | 1.904 | 2.565 |
| 380 | 1.895 | 2.548 |

The Table shows that the open circuit voltages of the cells containing the fired metal-rich iron sulphide cathodes are stable and much closer to the theoretical OCV of 1.7 than the open circuit voltages of cells having as cathodes mere mixtures of iron and sulphur-rich iron sulphide.

Claims

1.      A cathode material having a formula of
$Fe_{(x + 1)}S$ wherein x is a number in the range of from
0.05 to 0.2, the cathode material being substantially
devoid of sulphur-rich phases.

2.      A cathode material as claimed in claim 1,
wherein x is a number in the range of from 0.1 to 0.2.

3.      A cathode material as claimed in claim 2
wherein x is about 0.2.

4.      An electrochemical cell including an active
metal anode, an electrolyte compatible with the active
metal of the anode and a cathode of a material having
a formula of $Fe_{(1 + x)}S$ wherein x is a number in the
range of from 0.05 to 0.2, the cathode material being
substantially devoid of sulphur-rich phases.

5.      An electrochemical cell as claimed in claim
4, wherein x is a number in the range of from 0.1 to
0.2.

6.      An electrochemical cell as claimed in claim 4
or claim 5, wherein the active metal is lithium.

7.      A method of producing a cathode material,
which method comprises interdiffusing sulphur and/or iron
sulphide with iron in proportions equivalent to the
formula $Fe_{(1 + x)}S$ where x is a number in the range of
from 0.05 to 0.2 to provide a material substantially
devoid of sulphur-rich phases.

8.      A method as claimed in claim 7, wherein the
material is fired to eliminate all sulphur-rich
phases.

European Patent
Office

**EUROPEAN SEARCH REPORT**

Application number

EP 81304073.0

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 1 466 806 (UNITED STATES ENERGY) <br> * Page 1, lines 55-70 * <br> -- <br> GB - A - 1 571 347 (DU PONT) (16-07-1980) <br> * Page 1, lines 41-46; page 2, lines 4-8 * <br> -- <br> US - A - 3 836 403 (GAINES) <br> * Abstract * <br> ---- | 1,4 <br><br><br> 1,4,7 <br><br><br><br> 4,7,8 | C 01 G 49/12 <br> H 01 M 4/58 <br> H 01 M 6/16 |

**TECHNICAL FIELDS SEARCHED (Int. Cl.³)**

H 01 M

C 01 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search | | Date of completion of the search | Examiner |
| VIENNA | | 14-12-1981 | LUX |

EPO Form 1503.1 06.78